# EUROPEAN PATENT APPLICATION

(11) **EP 4 806 973 A1**
(43) Date of publication of application: **16.09.2026**
(21) Application number: 24903443.0
(22) Date of filing: 19.11.2024
(51) Int. Cl.: C09K 3/18, C09D 133/00, C09D 201/00, F25C 1/12

(54) **LAYER AND STRUCTURE**

(30) Priority: 11.12.2023 JP 2023208665; 13.06.2024 JP 2024096067
(71) Applicant: Daikin Industries, Ltd., Osaka-shi, Osaka 530-0001 (JP); The University of Tokyo, Bunkyo-ku, Tokyo 113-8654 (JP)
(72) Inventor: KUBOTA, Koji, Osaka-Shi, Osaka 530-0001 (JP); YAMAGUCHI, Hiroki, Osaka-Shi, Osaka 530-0001 (JP); INAMASU, Rena, Osaka-Shi, Osaka 530-0001 (JP); TSUDA, Sakae, Tokyo 113-8654 (JP); SASAKI, Yuji, Tokyo 113-8654 (JP)
(74) Representative: Hoffmann Eitle
(86) International application number: PCT/JP2024/040977
(87) International publication number: WO 2025/126784

(57) **Abstract**

An object of the present disclosure is to suppress the growth of ice on the base material.

A layer allowing thin ice to form on a surface thereof, wherein the thin ice hasa thickness of 1 mm or less and comprises aligned ice nuclei.

## Description

### Technical Field

This disclosure relates to a layer and a structure.

### Background Art

Certain polymers are known to suppress the growth of ice crystals in water and to reduce ice or frost formation on a substrate. These polymers may serve as so-called ice crystal growth inhibitors or anti-icing/anti-frosting agents in applications such as a thermal storage system, a heat exchanger, an aircraft, an electric wire, a greenhouse, and a power-generation turbine. Patent Literature 1 discloses an ice crystal growth inhibitor that contains a polymer having a carbon chain as a main chain and a functional group comprising a nitrogen atom as a side chain. Patent Literature 2 discloses an anti-icing/anti-frosting coating that contains an amphoteric polylysine derivative.

### Citation List

### Patent Literature

Patent Literature 1: JP 2006-299108 A
Patent Literature 2: JP 2022-187419 A

### Summary of Invention

### Technical Problem

These compounds known in the art are sometimes incapable of sufficiently suppressing the growth of ice on a base material. An object of the present disclosure is to suppress the growth of ice on the base material.

### Solution to Problem

The present disclosure comprises the following aspects.
[1] A layer allowing thin ice to form on a surface thereof, wherein the thin ice hasa thickness of 1 mm or less and comprises aligned ice nuclei.
[2] The layer according to [1], allowing ice nuclei having an average Feret diameter of 100 µm or less to form on the surface thereof when the layer is held for 1 minute under environmental conditions of an atmospheric pressure of 1,013 hPa, a humidity of 80 ± 5% RH, and a temperature of 2 ± 1°C, and then cooled to -8 ± 1°C under the same environmental conditions.
[3] The layer according to [1] or [2], allowing ice nuclei having an average Feret diameter of 100 µm or less to form on the surface thereof when the layer under environmental conditions of an atmospheric pressure of 1,013 hPa and a temperature of 20°C to 25°C is cooled to -25 ± 5°C.
[4] The layer according to any one of [1] to [3], wherein when the layer under environmental conditions of an atmospheric pressure of 1,013 hPa and a temperature of 20°C to 25°C is cooled to -25 ± 5°C to form ice nuclei and then further held at -8 ± 2°C for 1 hour, the layer is capable of maintaining an average Feret diameter of the ice nuclei of 100 µm or less.
[5] The layer according to any one of [1] to [4], allowing thin ice having an average thickness of 1 mm or less to form on the surface thereof when the layer is held for 1 minute under environmental conditions of an atmospheric pressure of 1,013 hPa, a humidity of 80 ± 5% RH, and a temperature of 2 ± 1°C, and then cooled to -8 ± 1°C under the same environmental conditions.
[6] The layer according to any one of [1] to [5], allowing thin ice comprising aligned ice nuclei to form on 95% or more of the surface thereof when the layer is held for 1 minute under environmental conditions of an atmospheric pressure of 1,013 hPa, a humidity of 80 ± 5% RH, and a temperature of 2 ± 1°C, and then subjected to continuous cycles of cooling to -8 ± 1°C and heating to 22 ± 3°C under the same environmental conditions.
[7] The layer according to any one of [1] to [6], wherein after thin ice comprising aligned ice nuclei is formed on a surface of the layer and melted, the layer allows thin ice comprising aligned ice nuclei to form on the surface again.
[8] The layer according to any one of [1] to [7], wherein when thin ice comprising aligned ice nuclei is formed on a surface of the layer, followed by immersing the surface partially or entirely in water for 120 hours to allow thin ice comprising aligned ice nuclei to form on the surface again, the thin ice forming after the immersing in water has a same shape as the thin ice forming before the immersing in water.
[9] The layer according to any one of [1] to [8], wherein a static contact angle of water on the surface is 30° or more and 100° or less, as measured 1 second after a water droplet impacts the surface at room temperature.
[10] The layer according to any one of [1] to [9], wherein the layer has a Ra value, a surface roughness parameter, of 0.001 µm or more and 1.500 µm or less, as measured on the surface in a region of 30 µm in length and 30 µm in width.
[11] The layer according to any one of [1] to [10], comprising a polymer having a functional group comprising a nitrogen atom.
[12] The layer according to any one of [1] to [11], comprising a polymer having a repeating unit with a nitrogen atom equivalent of 70 g/eq or less.
[13] The layer according to any one of [1] to [12], wherein a ratio of an amount of nitrogen atoms present on the surface to an amount of carbon atoms is 0.01 or more and 0.33 or less.
[14] The layer according to any one of [1] to [13], wherein the functional group comprising a nitrogen atom is a primary and/or secondary amino group, or a nitrogen-containing heterocyclic group.
[15] The layer according to any one of [1] to [14], wherein the polymer having a functional group comprising a nitrogen atom comprises a primary and/or secondary amino group or a nitrogen-containing heterocyclic group in a main chain and/or a side chain.
[16] The layer according to any one of [1] to [15], wherein the polymer having a functional group comprising a nitrogen atom is a (meth)acrylic (co)polymer or a (meth)acrylamide (co)polymer.
[17] The layer according to any one of [1] to [16], wherein the polymer having a functional group comprising a nitrogen atom has an acid value of 100 mg KOH/g or less.
[18] The layer according to any one of [1] to [17], which is a coating film.
[19] A film comprising water molecules,
   the film having a thickness of 20 Å or less,
   wherein the film exhibits no Ih phase under conditions of an atmospheric pressure of 1,013 hPa and a temperature of -8 ± 1°C.
[20] A structure comprising:
   a support;
   the layer according to any one of [1] to [18]; and
   the film according to [19],
   wherein the layer or film covers part or all of a surface of the support.
[21] The structure according to [20], wherein the layer is disposed on an outermost surface of the structure.
[22] The structure according to [20] or [21], further comprising:
   an adhesive layer disposed between the support and the layer, wherein
   the layer has an average thickness of 0.001 µm or more and 20 µm or less, and
   the adhesive layer has an average thickness of 0.001 µm or more and 20 µm or less.
[23] A member comprising the layer according to any one of [1] to [18] or the film according to [19].
[24] An article comprising the member according to [23].

### Advantageous Effect of Invention

A layer and a structure of the present disclosure can suppress the growth of ice on a base material.

### Brief Description of Drawings

[FIG. 1] FIG. 1-I is a diagram of the molecular structure of an ice nucleus. FIG. 1-II is a conceptual diagram of a quasi-ice layer (C) formed on a solid-state polymer (B). FIG. 1-III is a conceptual diagram illustrating a layer and a structure of the present invention. In the diagram, a sphere represents an oxygen atom. A denotes a support, B denotes a coating film (layer), C denotes a quasi-ice layer (film), and D denotes thin ice comprising aligned ice nuclei. A + B is referred to as the structure.
[FIG. 2] FIG. 2 is a schematic diagram illustrating a method of setting a test piece on a cooling/heating stage.
[FIG. 3] FIG. 3 is a conceptual diagram illustrating a temperature control program for a test piece.
[FIG. 4] FIG. 4 shows images of ice formed on: A. an unprocessed aluminum test piece; and B. an aluminum test piece with a layer of POLYMENT NK-100PM, after 0, 1, 2, 3, 3.5, and 4 hours from activation of a temperature control program.
[FIG. 5] FIG. 5 is a schematic diagram illustrating ice formed on: A. an unprocessed aluminum test piece; and B. an aluminum test piece with a layer of POLYMENT NK-100PM, in association with a temperature control program. White circles each denote a water molecule present in an environment with a humidity of 80%. Squares in B each denote an ice nucleus.
[FIG. 6] FIG. 6 shows images of ice formed on: A. an aluminum test piece with a layer of polyacrylamide; and B. an aluminum test piece with a layer of ammonium polyacrylate.
[FIG. 7] FIG. 7 shows microscopic images of ice formed on: A. an unprocessed glass test piece; B. a glass test piece with a 10 µm-thick layer of polyacrylamide; and C. a glass test piece with a 10 µm-thick layer of ammonium polyacrylate.
[FIG. 8] FIG. 8 shows microscopic images of ice formed on: A. a glass test piece with a 10 µm-thick layer of POLYMENT NK-100PM; B. a glass test piece with a 10 µm-thick layer of poly-L-lysine; C. a glass test piece with a 10 µm-thick layer of ε-poly-L-lysine; and D. a glass test piece with a 10 µm-thick layer of EPOMIN SP-200.

### Description of Embodiments

### (First Aspect: Layer)

The layer of the present disclosure allows thin ice to form on a surface of the layer, wherein the thin ice has a thickness of 1 mm or less and is comprising aligned ice nuclei.

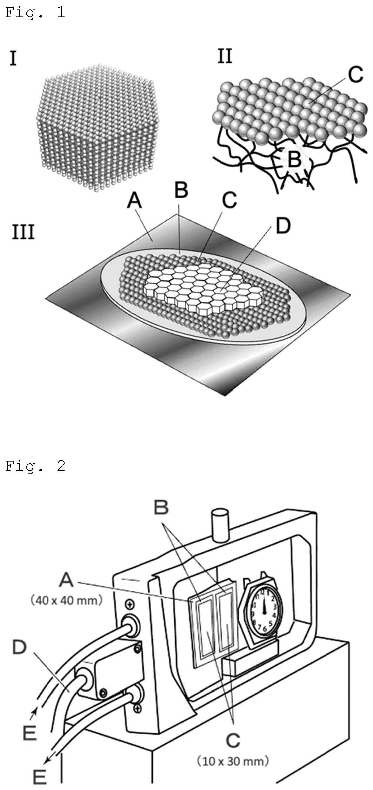

In water cooled to 0°C or lower in a state just before freezing, innumerable tiny crystals of water molecules, referred to as ice nuclei, spontaneously form (FIG. 1-I). The ice nuclei undergo repeated crystal growth and random coalescence to form a block of ice. Repeated freezing and thawing of the ice block at a high relative humidity of about 80% and a low temperature of about 2°C particularly increases the size of the ice block. The ice block formed in this manner deteriorates or breaks a support and reduces the performance of various devices that utilize cooling potential, thus causing problems in the fields of industry and medicine.

Certain polymers are known to suppress the crystal growth of ice nuclei in an aqueous solution thereof. For example, Patent Literature 1 describes that an aqueous solution of a polymer having a carbon chain as the main chain and a functional group comprising a nitrogen atom as a side chain suppresses the growth of ice nuclei in the solution. Patent Literature 2 describes that an amphoteric polylysine derivative applied onto a support delays the onset of freezing of water on the coated surface. However, no substance or method has been left entirely unspecified that allows thin ice instead of an ice block to form under high-humidity and low-temperature conditions, which are critical for suppressing the formation of an ice block on a support.

The layer of the present disclosure can suppress the formation of an ice block on a base material and, preferably, can suppress the formation of an ice block on a support even under high-humidity and low-temperature conditions, while the layer allows for the formation of thin ice comprising aligned ice nuclei instead. Furthermore, even when thin ice repeatedly undergoes freezing and thawing under high-humidity and low-temperature conditions, the layer allows for the formation of thin ice with good reproducibility instead of an ice block. Although the present disclosure should not be interpreted as being bound by any particular theory, the reason why the layer of the present disclosure can exhibit such effects may be as follows. The layer of the present disclosure has a thin ice-forming ability to allow the formation of thin ice having a thickness of 1 mm or less and comprising aligned ice nuclei on the surface of the layer; and because the thin ice comprises aligned ice nuclei, the crystal growth can be suppressed, leading to suppressed ice growth on the base material.

In other words, the arrangement of water molecules constituting an ice nucleus (FIG. 1-I) is strictly defined, and the ice nucleus cannot undergo crystal growth when this arrangement deviates. Based on this understanding, the present inventors have conceived that, if a quasi-ice layer (hereinafter, also referred to as "QIL") (FIG. 1-II, C) forms on any solid-state substance (FIG. 1-II, B), the difference in the arrangement of the water molecules between the QIL and the ice nucleus (FIG. 1-I) suppresses the growth and coalescence of ice nuclei adhering to the quasi-ice layer, thereby preventing the formation of an ice block. The present inventors expected that innumerable ice nuclei of very small size, which cannot coalesce with one another because the quasi-ice layer stops the growth, would become densely packed on the quasi-ice layer (FIG. 1-III, D), and considered that this accumulation would macroscopically correspond to the formation of "thin ice". As a result of extensive experimentation, the present inventors found that, even under high-humidity and low-temperature conditions, an ice block does not form on the surface of the quasi-ice layer formed on the layer of the present invention, but thin ice forms instead, and that the thin ice consists of innumerable microscopic ice nuclei aligned in a uniform orientation to become densely packed. Moreover, even when the thin ice repeatedly undergoes freezing and thawing under high-humidity and low-temperature conditions, an ice block does not form on the structure including the layer, but the thin ice reproducibly forms instead. Thus, the present inventors completed the present invention.

The present disclosure also clarifies a coating film (layer) made of a solid-state substance capable of allowing for the formation of thin ice consisting of ice nuclei aligned instead of an ice block even under high-humidity and low-temperature conditions, and also a support (structure) with the layer.

In the thin ice, the aligned ice nuclei typically consist of two or more single-crystal ice domains aligned in contact with one another in the plane direction. The grain boundaries between the two or more single crystals may extend in a direction perpendicular to the plane direction. This can be confirmed by, for example, observing the thin ice with an optical microscope in a direction perpendicular to the plane direction to find that two or more ice nuclei are aligned and separated by boundary lines.

In a preferred embodiment, the layer may allow ice nuclei having an average Feret diameter of 100 µm or less to form on the surface thereof when the layer is held for 1 minute under environmental conditions of an atmospheric pressure of 1,013 hPa, a humidity of 80 ± 5% RH, and a temperature of 2 ± 1°C, and then cooled to -8 ± 1°C under the same environmental conditions. The formation of the ice nuclei having an average Feret diameter of 100 µm or less can suppress the growth of ice.

The average Feret diameter of the ice nuclei is preferably 100 µm or less, more preferably 80 µm or less, still more preferably 50 µm or less, and may be for example, 1 µm or more, or 10 µm or more.

In the present disclosure, the Feret diameter of the ice nucleus refers to the major axis of a rectangle circumscribing the ice nucleus. In the present disclosure, the average Feret diameter refers to the number average value of Feret diameters measured for 10 or more ice nuclei.

In the present disclosure, the Feret diameter of an ice nucleus can be measured by observing the thin ice in the direction perpendicular to the plane direction with an optical microscope.

In a preferred embodiment, the layer may allow ice nuclei having an average Feret diameter of 100 µm or less to form on the surface thereof when the layer under environmental conditions of an atmospheric pressure of 1,013 hPa and a temperature of 20°C to 25°C is cooled to -25 ± 5°C. The formation of the ice nuclei having an average Feret diameter of 100 µm or less can suppress the growth of ice.

The average Feret diameter of the ice nuclei is preferably 100 µm or less, more preferably 80 µm or less, still more preferably 50 µm or less, and may be for example, 1 µm or more, or 10 µm or more.

In a preferred embodiment, when the layer under environmental conditions of an atmospheric pressure of 1,013 hPa and a temperature of 20°C to 25°C is cooled to -25 ± 5°C to form ice nuclei and then further held at -8 ± 2°C for 1 hour, the layer is capable of maintaining an average Feret diameter of the ice nuclei of 100 µm or less. The formation of the ice nuclei having an average Feret diameter of 100 µm or less can suppress the growth of ice.

The average Feret diameter of the ice nuclei after the layer is held at -8 ± 2°C for 1 hour is preferably 100 µm or less, more preferably 80 µm or less, still more preferably 50 µm or less, and may be for example, 1 µm or more, or 10 µm or more.

In a preferred embodiment, the layer may allow thin ice comprising aligned ice nuclei to form on 95% or more of the surface thereof when the layer is held for 1 minute under environmental conditions of an atmospheric pressure of 1,013 hPa, a humidity of 80 ± 5% RH, and a temperature of 2 ± 1°C, and then subjected to continuous cycles of cooling to -8 ± 1°C and heating to 22 ± 3°C under the same environmental conditions. Formation of thin ice over such an area proportion enables suppression of ice growth over a wide region.

The proportion of the surface area of the layer on which thin ice comprising the aligned ice nuclei forms is preferably 95% or more, more preferably 98% or more, and still more preferably 99% or more, and is 100% or less.

The formation of the thin ice comprising the aligned ice nuclei can be confirmed by observing the surface of the layer with an optical microscope.

In a preferred embodiment, the layer may allow thin ice having an average thickness of 1 mm or less to form on the surface thereof when the layer is held for 1 minute under environmental conditions of an atmospheric pressure of 1,013 hPa, a humidity of 80 ± 5% RH, and a temperature of 2 ± 1°C, and then cooled to -8 ± 1°C under the same environmental conditions. The formation of the thin ice having an average thickness of 1 mm or less can suppress the growth of ice.

The average thickness of the thin ice is preferably 1 mm or less, more preferably 0.8 mm or less, and still more preferably 0.5 mm or less, and may be for example, 1 µm or more, or 10 µm or more.

In the present disclosure, the thickness of thin ice can be measured by observing the thin ice in the plane direction with an optical microscope. In the present disclosure, the average thickness of the thin ice refers to a value obtained by measuring the thickness of the thin ice at 10 or more locations and taking the arithmetic average of these measurements.

In a preferred embodiment, after thin ice comprising aligned ice nuclei is allowed to form on the surface of the layer and melt, the layer may allow thin ice comprising aligned ice nuclei to form on the surface again. In other words, even after the thin ice has once melted, the layer may allow to form thin ice again when the layer is cooled. The layer further allows the thin ice to form even when the layer is heated and cooled repeatedly.

The number of heating-cooling cycles is preferably 1 or more, more preferably 5 or more, and still more preferably 8 or more. For example, in a case of aluminum fins used in a heat exchanger, the upper limit of the number of heating-cooling cycles may follow that applicable to the fins, and is, for example, preferably 20,000 or less, more preferably 10,000 or less, and still more preferably 2,000 or less.

In a preferred embodiment, when thin ice comprising aligned ice nuclei forms on a surface of the layer, followed by immersing the surface partially or entirely in water for 120 hours to allow thin ice comprising aligned ice nuclei to form on the surface again, the thin ice forming after the immersion in water has the same shape as the thin ice forming before the immersion in water. In other words, the layer can maintain the structure of ice nuclei even when the thin ice comprising aligned ice nuclei forms and is then immersed in water under conditions capable of promoting crystal growth. Therefore, the layer may suppress the growth of an ice crystal.

For example, the rate of change in the average Feret diameter of the ice nuclei in the thin ice is preferably 0% or more and 10% or less, more preferably 0% or more and 5% or less, and still more preferably 0% or more and 3% or less, thus demonstrating that the thin ice retains the same shape. The rate of change in the average Feret diameter of the ice nuclei in the thin ice may be calculated, for example, as (average Feret diameter in thin ice after immersion in water - average Feret diameter in thin ice before immersion in water)/average Feret diameter in thin ice before immersion in water.

The rate of change in the average thickness of the thin ice is preferably 0% or more and 10% or less, more preferably 0% or more and 5% or less, and still more preferably 0% or more and 3% or less, thus demonstrating that the thin ice retains the same shape. The rate of change in the average thickness of the thin ice may be calculated, for example, as (average thickness of thin ice after immersion in water - average thickness of thin ice before immersion in water)/average thickness of thin ice before immersion in water.

In a preferred embodiment, the static contact angle of water on the surface of the layer is preferably 30° or more and 100° or less, more preferably 31° or more and 99° or less, and still more preferably 32° or more and 98° or less, as measured 1 second after a water droplet impacts the surface at room temperature. When the static contact angle falls within this range, the layer allows a quasi-ice layer to form on the surface, thereby forming thin ice, and as a result, the layer can suppress the growth of ice (ice block).

In the present disclosure, the static contact angle may be measured in accordance with JIS R 3257.

In a preferred embodiment, a water film of (super)cooled water present on the layer prior to freezing is preferably uniform to achieve uniform formation of the thin ice. The layer may have a Ra (arithmetic average roughness) value, which is a surface roughness parameter, of preferably 0.001 µm or more and 1.500 µm or less, as measured on the surface in a region of 30 µm in length and 30 µm in width. When the Ra value falls within this range, the water film of (super)cooled water present on the surface of the layer prior to freezing becomes uniform, thereby forming thin ice having a uniform thickness, and as a result, the layer can suppress the growth of ice (ice block).

The Ra value, which is a surface roughness parameter, is preferably 0.001 µm or more and 1.500 µm or less, more preferably 0.004 µm or more and 1.400 µm or less, and still more preferably 0.007 µm or more and 1.300 µm or less.

In the present disclosure, the Ra value, which is a surface roughness parameter, may be measured in accordance with ISO 25178.

In a preferred embodiment, the ratio of the amount of nitrogen atoms present on the surface of the layer to the amount of carbon atoms may be 0.01 or more and 0.33 or less. When this ratio falls within such a range, the layer allows a quasi-ice layer to form on the surface, thereby forming thin ice.

The ratio is preferably 0.01 or more and 0.33 or less, more preferably 0.02 or more and 0.30 or less, and still more preferably 0.03 or more and 0.27 or less.

The ratio may be measured by X-ray photoelectron spectroscopy (XPS).

In a preferred embodiment, the layer of the present disclosure preferably comprises a polymer having a functional group comprising a nitrogen atom. When the layer comprises the polymer having a functional group comprising a nitrogen atom, the surface of the layer randomly adsorbs water molecules, so that the water molecules may possess a crystalline arrangement distinct from that of a typical ice crystal phase (for example, the Ih phase). As a result, ice crystal growth is suppressed, presumably leading to suppressed overall ice growth.

Examples of the functional group comprising a nitrogen atom include an amino group, an ammonium group, an imino group, an amide linkage, and a nitrogen-containing heterocyclic group.

Examples of the amino group include substituted or unsubstituted primary, secondary, and tertiary amino groups, and examples of a substituent of the amino group include a C₁₋₁₀ alkyl group and a C₁₋₁₀ alkanol group.

Examples of a substituent of the ammonium group include a C₁₋₁₀ alkyl group and a C₁₋₁₀ alkanol group, and examples of the counter base of the ammonium group include a halogen atom such as a chlorine atom. Specific examples of the ammonium group include trimethylammonium chloride, triethylammonium chloride, triethylammonium chloride, and trihydroxylethylammonium chloride.

The amide linkage is, for example, a group represented by -NR¹⁰-CO-, and R¹⁰ represents a hydrogen atom or a C₁₋₂₀ hydrocarbon group. The C₁₋₂₀ hydrocarbon group represented by R¹⁰ is preferably a C₁₋₁₀ alkyl group, more preferably a C₁₋₅ alkyl group, and still more preferably a C₁₋₃ alkyl group.

The nitrogen-containing heterocyclic group may be either monocyclic or polycyclic. The nitrogen-containing heterocyclic group is preferably a 5- to 10-membered ring, more preferably a 5- to 9-membered ring, still more preferably a 5- or 6-membered ring, and even more preferably a 5-membered ring. Examples of the nitrogen-containing heterocyclic group include monocyclic and 5-membered nitrogen-containing heterocyclic groups such as a pyrrolidinyl group, a pyrrolyl group, an imidazolyl group, a pyrralodyl group, an oxazolyl group, a thiazolyl group, an imidazolinyl group, a triazolyl group, and a tetrazolyl group; monocyclic 6-membered nitrogen-containing heterocyclic groups such as a piperidinyl group, a pyridinyl group, a morpholinyl group, a pyridazinyl group, a pyrimidinyl group, and a pyrazinyl group; and polycyclic nitrogen-containing heterocyclic groups such as an indolyl group, an isoindolyl group, a benzimidazolyl group, a purinyl group, a benzotriazolyl group, a quinolinyl group, an isoquinolinyl group, a quinazolyl group, and a quinoxalinyl group.

The nitrogen-containing heterocyclic group is preferably a 5-membered nitrogen-containing heterocyclic group, and more preferably an oxazolyl group.

The functional group comprising a nitrogen atom is preferably an amino group or a nitrogen-containing heterocyclic group, more preferably a primary and/or secondary amino group, or a nitrogen-containing heterocyclic group, and still more preferably a primary and/or secondary amino group.

The polymer having a functional group comprising a nitrogen atom is preferably a polymer having a functional group comprising a nitrogen atom in the main chain and/or side chain, more preferably a polymer having one or more groups selected from an amino group, an ammonium group, an imino group, an amide linkage, and a nitrogen-containing heterocyclic group in the main chain and/or side chain, still more preferably a polymer having an amino group or a nitrogen-containing heterocyclic group in the main chain and/or side chain, even more preferably a polymer having a primary and/or secondary amino group or a nitrogen-containing heterocyclic group in the main chain and side chain, and even further preferably a polymer having a primary and/or secondary amino group in the main chain and side chain.

Examples of the polymer having a functional group comprising a nitrogen atom include a (meth)acrylic (co)polymer, a (meth)acrylamide (co)polymer, polyethyleneimine, and poly-L-lysine.

In view of, for example, mass productivity, economic efficiency, and handling properties, the polymer having a functional group comprising a nitrogen atom is preferably a (meth)acrylic (co)polymer or a (meth)acrylamide (co)polymer. The (meth)acrylic (co)polymer or (meth)acrylamide (co)polymer can be understood as a (meth)acrylic (co)polymer or (meth)acrylamide (co)polymer having a functional group comprising a nitrogen atom.

The (meth)acrylic (co)polymer may be a (co)polymer of a monomer mixture containing a (meth)acrylic monomer, and the (meth)acrylamide (co)polymer may be a (co)polymer of a monomer mixture containing a (meth)acrylamide monomer. Examples of the monomer contained in such a monomer mixture include an unsaturated carboxylic acid, a (meth)acrylic acid ester, a hydroxyl group-containing monomer, an amino group-containing monomer, an amide group-containing monomer, an unsaturated carboxyammonium salt, an unsaturated quaternary ammonium salt, a vinyl ether, a vinyl ester, an N-vinyl compound, an unsaturated alcohol, an unsaturated amine, an unsaturated sulfonic acid, and (meth)acrylonitrile.

Specific examples of the monomer contained in the monomer mixture include unsaturated carboxylic acids such as (meth)acrylic acid; (meth)acrylic acid esters such as methyl (meth)acrylate, ethyl (meth)acrylate, n-butyl (meth)acrylate, 2-ethylhexyl (meth)acrylate, cyclopentyl (meth)acrylate, cyclohexyl (meth)acrylate, methylcyclohexyl (meth)acrylate, t-butylcyclohexyl (meth)acrylate, and hydroxymethylcyclohexyl (meth)acrylate; hydroxyl group-containing monomers such as 2-hydroxyethyl (meth)acrylate, 2-hydroxypropyl (meth)acrylate, and 4-hydroxybutyl (meth)acrylate; amino group-containing monomers such as aminoethyl (meth)acrylate, dimethylaminoethyl (meth)acrylate, and butylaminoethyl (meth)acrylate; other amide group-containing monomers such as aminoethyl (meth)acrylamide, dimethylaminomethyl (meth)acrylamide, methylaminopropyl (meth)acrylamide, (meth)acrylamide, N-methylol (meth)acrylamide, methoxybutyl (meth)acrylamide, and diacetone (meth)acrylamide; unsaturated carboxyammonium salts such as ammonium acrylate; unsaturated quaternary ammonium salts such as 2-(acryloyloxy)ethyl] ammonium chloride; vinyl ethers such as methyl vinyl ether and ethyl vinyl ether; vinyl esters such as vinyl acetate; N-vinyl compounds such as N-vinylpyrrolidone; unsaturated alcohols such as allyl alcohol and methallyl alcohol; unsaturated amines such as allylamine; unsaturated sulfonic acids such as 2-acrylamido-2-methylpropanesulfonic acid; vinyl cyanides such as (meth)acrylonitrile and α-chloroacrylonitrile; aromatic group-containing monomers such as styrene and vinyltoluene; and nitrogen-containing heterocyclic group-containing monomers such as 2-vinyl-oxazoline, 4-methyl-2-vinyl-2-oxazoline, and 5-methyl-2-vinyl-2-oxazoline.

The (meth)acrylic (co)polymer and (meth)acrylamide (co)polymer can be produced by polymerizing the monomer mixture. Examples of the polymerization method preferably include radical polymerization and anionic polymerization, and the polymerization may be carried out by any suitable method.

The weight average molecular weight of the (meth)acrylic (co)polymer and (meth)acrylamide (co)polymer is preferably 1,000 or more and 1,000,000 or less, more preferably 3,000 or more and 500,000 or less, and still more preferably 5,000 or more and 200,000 or less.

In the present disclosure, the weight average molecular weight can be measured using gel permeation chromatography and may be a value in terms of polystyrene.

In one embodiment, the total content of the (meth)acrylic (co)polymer and (meth)acrylamide (co)polymer having a functional group comprising a nitrogen atom is preferably 80% by mass or more and 100% by mass or less, more preferably 90% by mass or more and 100% by mass or less, and still more preferably 95% by mass or more and 100% by mass or less, based on a total of 100% by mass of the polymer having a functional group comprising a nitrogen atom.

The polyethyleneimine is a polymer having a repeating unit comprising an amino group and an alkylene group, and the repeating unit may be represented, for example, by the following formula:

-(R¹-NH-)ₙ₁- (1)

[In formula (1),
R¹ represents a C₂₋₁₀ alkylene group, and
n1 represents an integer of 2 or more.]

In formula (1), R¹ is preferably a C₂₋₅ alkylene group, more preferably a C₂₋₃ alkylene group.

The polyethyleneimine may be linear or branched, and branched chains may further join to form a cyclic structure.

A cyclic amine such as aziridine can undergo ring-opening polymerization to produce the polyethyleneimine.

The weight average molecular weight of the polyethyleneimine is preferably 80 or more and 300,000 or less, more preferably 90 or more and 200,000 or less, and still more preferably 100 or more and 100,000 or less.

The polyethyleneimine may be a (meth)acrylic (co)polymer or (meth)acrylamide (co)polymer having a polyethyleneimine chain. Specific examples of the (meth)acrylic copolymer having a polyethyleneimine chain include "POLYMENT NK100PM", "POLYMENT NK-200PM", "POLYMENT NK-350", "POLYMENT NK-380", "POLYMENT KX-EK-100", "POLYMENT KX-EK-100R", "POLYMENT KX-EK-350", and "POLYMENT KX-EK-350R", all manufactured by Nippon Shokubai Co., Ltd.

Examples of the poly-L-lysine include α-poly-L-lysine and ε-poly-L-lysine.

The weight average molecular weight of the poly-L-lysine is preferably 1,000 or more and 30,000 or less, more preferably 3,000 or more and 20,000 or less, and still more preferably 4,500 or more and 15,000 or less.

The weight average molecular weight of the α-poly-L-lysine is preferably 5,000 or more and 30,000 or less, more preferably 9,000 or more and 20,000 or less, and still more preferably 12,000 or more and 15,000 or less. The weight average molecular weight of the ε-poly-L-lysine is preferably 1,000 or more and 10,000 or less, more preferably 3,000 or more and 8,000 or less, and still more preferably 4,500 or more and 5,000 or less.

The polymer having a functional group comprising a nitrogen atom preferably has a repeating unit with a nitrogen atom equivalent of 70 g/eq or less. The nitrogen atom equivalent is preferably 70 g/eq or less, more preferably 40 g/eq or more and 68 g/eq or less, and still more preferably 30 g/eq or more and 66 g/eq or less. The repeating unit with a nitrogen atom equivalent of 70 g/eq or less may be the smallest repeating unit comprising a nitrogen atom in the polymer having a functional group comprising a nitrogen atom.

The acid value of the polymer having a functional group comprising a nitrogen atom is preferably 100 mg KOH/g or less, more preferably 50 mg KOH/g or less, and still more preferably 20 mg KOH/g or less, and is 0 mg KOH/g or more. When the acid value of the polymer having a functional group comprising a nitrogen atom falls within this range, the surface of the layer randomly adsorbs water molecules, so that the water molecules may possess a crystalline arrangement distinct from that of a typical ice crystal phase (for example, the Ih phase). As a result, ice crystal growth is suppressed, presumably leading to suppressed overall ice growth.

The weight average molecular weight of the polymer having a functional group comprising a nitrogen atom is preferably 1,000 or more and 1,000,000 or less, more preferably 3,000 or more and 500,000 or less, and still more preferably 5,000 or more and 200,000 or less.

In one embodiment, the proportion of the polymer having a functional group comprising a nitrogen atom in the layer is preferably 80% by mass or more and 100% by mass or less, more preferably 90% by mass or more and 100% by mass or less, and still more preferably 95% by mass or more and 100% by mass or less, based on a total of 100% by mass of the layer. In another aspect, the proportion of the polymer having a functional group comprising a nitrogen atom in the layer is preferably 30% by mass or more and 95% by mass or less, more preferably 40% by mass or more and 90% by mass or less, and still more preferably 50% by mass or more and 85% by mass or less, based on a total of 100% by mass of the layer.

The layer may comprise an additive in addition to a polymer having a functional group comprising a nitrogen atom. Examples of such an additive include a thickener, a leveling agent, an antifoaming agent, an antistatic agent, an anti-fogging agent, an ultraviolet absorber, a radical scavenger, a pigment, a dye, and a filler. The layer may further comprise a compound having a polyalkylene.glycol chain to adjust the wettability of the surface, and, as needed, a cross-linking agent that fixes the compound to the layer and/or polymer having a functional group comprising a nitrogen atom. The polyalkylene glycol chain is preferably a polyethylene glycol chain and a polypropylene glycol chain. Examples of the compound having a polyalkylene glycol chain include a compound having a hydroxyl group at the end of the polyalkylene glycol chain, a compound having an alkoxy group at the end of the polyalkylene glycol chain, and a compound having a glycidyl alkyl ether group at the end of the polyalkylene glycol chain.

Specific examples of the compound having a polyalkylene glycol chain include polyethylene glycol, polypropylene glycol, polyoxytetramethylene polyoxyethylene glycol, polyoxytetramethylene polyoxypropylene glycol, polyoxyethylene alkyl ether, polyoxyethylene branched alkyl ether, polyoxyethylene oleyl ether, polyoxyethylene polyoxypropylene alkyl ether, polyoxyethylene polyoxypropylene branched alkyl ether, polyoxyethylene polyoxypropylene oleyl ether, polyoxypropylene alkyl ether, polyoxypropylene branched alkyl ether, polyoxypropylene oleyl ether, polyoxyethylene monoalkylate, polyoxyethylene monooleate, Tween 20, Tween 80, polyoxyethylene sorbitan monostearate, polyoxyethylene sorbitan trioleate, polyoxyethylene coconut-fatty-acid glyceryl, polyoxyethylene hydrogenated castor oil, polyoxyethylene castor oil, polyoxyethylene sorbit tetraoleate, polyethylene glycol-polypropylene glycol-polyethylene glycol, polyoxyethylene stearyl amine, polyoxyethylene oleyl amine, polyoxyethylene alkyl propylene diamine, polyoxyethylene fatty-acid monoethanolamide, polyoxyethylene glyceryl ether, polyoxypropylene glyceryl ether, polyoxypropylene diglyceryl ether, polyoxypropylene sorbit, polyoxyethylene polyoxypropylene pentaerythritol ether, polyoxyethylene polyoxybutylene pentaerythritol ether, trimethylolpropane tris(polyoxytetramethylene polyoxypropylene) ether, polyethylene glycol allyl ether, polypropylene glycol allyl ether, polyethylene glycol-polypropylene glycol allyl ether, polyethylene glycol diglycidyl ether, polypropylene glycol diglycidyl ether, polyethylene glycol glycidyl lauryl ether, and polyethylene glycol glycidyl methyl ether. The polymer having a functional group comprising a nitrogen atom may also include a compound having the polyalkylene glycol chain, the compound being bonded to the functional group comprising a nitrogen atom with a cross-linking agent.

The cross-linking agent can be selected appropriately depending on the functional group of the compound having a polyalkylene glycol chain. When the functional group is a OH group, the cross-linking agent is preferably an isocyanate compound, and specific examples thereof include hexamethylene diisocyanate, a hexamethylene diisocyanate trimer, 1,4-cyclohexyl diisocyanate, dicyclohexylmethane-4,4'-diisocyanate, 4,4'-diisocyanato-3,3'-dimethylbiphenyl, and isophorone diisocyanate. These isocyanate groups may also be blocked with a blocking agent such as 3,5-dimethylpyrazole, diethyl malonate, methyl ethyl ketoxime, or ε-caprolactam.

In one embodiment, the total amount of the compound having a polyalkylene glycol chain and the cross-linking agent is, preferably 0% by mass or more and 99% by mass or less, more preferably 0% by mass or more and 75% by mass or less, and still more preferably 0% by mass or more and 50% by mass or less, relative to 100% by mass of the polymer having a functional group comprising a nitrogen atom. The cross-linking agent is preferably 0% by mass or more and 50% by mass or less, more preferably 0% by mass or more and 40% by mass or less, and still more preferably 0% by mass or more and 30% by mass or less, relative to 100% by mass of the compound having a polyalkylene glycol chain.

In another embodiment, the total amount of the compound having a polyalkylene glycol chain and the cross-linking agent is preferably 10% by mass or more and 99% by mass or less, more preferably 20% by mass or more and 75% by mass or less, and still more preferably 25% by mass or more and 50% by mass or less, relative to 100% by mass of the polymer having a functional group comprising a nitrogen atom. The cross-linking agent is preferably 1% by mass or more and 50% by mass or less, more preferably 3% by mass or more and 40% by mass or less, and still more preferably 5% by mass or more and 30% by mass or less, relative to 100% by mass of the compound having a polyalkylene glycol chain.

The thickness of the layer is preferably 0.001 µm or more and 20 µm or less, more preferably 0.01 µm or more and 10 µm or less, and still more preferably 0.05 um or more and 5 µm or less.

Example of the method for forming the layer include, but are not limited to, a wet coating method and a dry coating method, and the method is preferably a wet coating method. The layer formed by the wet coating method is referred to hereinafter as a coating film.

In one embodiment, the layer can be produced by applying a solution containing the polymer having a functional group comprising a nitrogen atom and any additive used as needed, and is preferably formed by covering with the solution using a wet coating method.

In the solution, the content of the polymer having a functional group comprising a nitrogen atom can be selected appropriately depending on a covering method, but in view of uniform covering properties and handling properties, the content is preferably 0.01% by mass or more and 30% by mass or less, more preferably 0.05% by mass or more and 20% by mass or less, and still more preferably 0.1% by mass or more and 10% by mass or less. The arrangement and density of nitrogen atoms correlate with the ease of forming a quasi-ice layer, presumably contributing to the formation of thin ice.

For example, the solution may comprise, as a solvent, any of water; lower alcohols such as ethanol, butanol, and isopropyl alcohol; ketones such as acetone, methyl ethyl ketone, and methyl isobutyl ketone; glycols such as methyl cellosolve, ethyl cellosolve, propylene glycol, and 1-methoxy-2-propanol; aromatic hydrocarbons such as xylene and toluene; aliphatic hydrocarbons such as n-hexane and n-heptane; and esters such as ethyl acetate and butyl acetate. Among them, the solvent is preferably water, a lower alcohol, or a glycol, and more preferably water.

Examples of the wet coating method include dip coating, spin coating, brush coating, flow coating, spray coating, roll coating, gravure coating, and a similar method.

After applying the solution comprising the polymer having a functional group comprising a nitrogen atom and an additive used as needed to produce a precursor film, the resulting precursor film may be dried as needed. Such drying removes the solvent or the like.

The precursor layer may be dried at a temperature of preferably 0°C or higher and 200°C or lower, more preferably 5°C or higher and 180°C or lower, and still more preferably 10°C or higher and 150°C or lower, and for a duration of 1 minute or more and 10 hours or less, more preferably 2 minutes or more and 5 hours or less, and still more preferably 3 minutes or more and 3 hours or less.

Examples of the dry coating method include vapor deposition (typically, vacuum vapor deposition), sputtering, CVD, and a similar method. Specific examples of a vapor-deposition method (typically, a vacuum vapor-deposition method) include resistance heating, electron-beam heating, high-frequency heating using a microwave or the like, ion beam, and a similar method. Specific examples of a CVD method include plasma CVD, optical CVD, thermal CVD, and a similar method.

### (Second Aspect: Film)

The technical scope of the present disclosure also includes a film comprising water molecules,
the film having a thickness of 20 Å or less,
wherein no Ih phase is present under conditions of an atmospheric pressure of 1,013 hPa and a temperature of -8 ± 1°C.

On the surface of the film, the growth of ice can be suppressed. Under conditions of an atmospheric pressure of 1,013 hPa and a temperature of -8 ± 1°C, water molecules normally form the Ih phase, which presumably promotes ice crystal growth on the surface of ice exhibiting the Ih phase. However, the film of the present disclosure does not exhibit the Ih phase, and the lattice arrangement of water molecules in the film might differ from that of water molecules in the Ih phase. Therefore, even if the surface of the film adsorbs water molecules, the water molecules may not contribute to the formation of an ice crystal, thus suppressing the growth of ice.

The thickness of the film is 20 Å or less, preferably 3 Å or more and 20 Å or less.

In one embodiment, when the layer is held for 1 minute under environmental conditions of an atmospheric pressure of 1,013 hPa, a humidity of 80 ± 5% RH, and a temperature of 2 ± 1°C, and then cooled to -8 ± 1°C under the same environmental conditions, the film may be formed on the layer.

The present disclosure also includes a laminate comprising the layer and a film disposed on the layer, the film comprising water molecules, having a thickness of 20 Å or less, and exhibiting no Ih phase under conditions of an atmospheric pressure of 1,103 hPa and a temperature of -8 ± 1°C.

### (Third Aspect: Structure, Member, and Article)

The technical scope of the present disclosure also includes a structure comprising a support and the layer. In the structure, the layer covers part or all of the surface of the support.

Such a structure can suppress the growth of ice on the surface thereof.

The support usable in the present disclosure can comprise, for example, glass, resin (natural or synthetic resin, such as commonly used plastic materials), metal, ceramics, semiconductor materials (such as silicon or germanium), fibers (such as textiles or nonwoven fabrics), fur, leather, wood, porcelain, stone, building materials, sanitary materials, or any other suitable material.

In a preferred embodiment, the support can comprise metal. Examples of the metal include Si, Al, Cu, Fe, Ni, Zn, and an alloy containing any of these elements. Examples of such an alloy include, but are not limited to, a Fe/Ni/Cr alloy and an Al/Cu alloy. In a more preferred embodiment, the metal constituting the support include Al, Cu, Fe, or SUS.

The shape of the support is not limited, and the support may have any shape depending on the intended use. For example, the support may have a simple shape such as a plate shape or a rod shape, or alternatively, a fin shape, an uneven shape, or a porous structure in order to increase the surface area.

The layer is the same as the layer of the first aspect. The layer covers part or all of the surface of the support. The layer is disposed on the outermost surface of the structure.

The average thickness of the layer is preferably 0.001 µm or more and 20 µm or less, more preferably 0.01 µm or more and 10 µm or less, and still more preferably 0.05 µm or more and 5 µm or less.

In a preferred embodiment, the structure preferably further includes an adhesive layer disposed between the support and the layer. The adhesive layer may increase the adhesion between the support and the layer.

A primer forms the adhesive layer. The primer contains a coupling agent having an organic reactive group and a hydrolyzable silyl group in a single molecule thereof.

The concentration of the coupling agent may be, for example, 0.05% by mass or more, 0.1% by mass or more, or 0.5% by mass or more, relative to 100% by mass of the primer. The concentration of the coupling agent may be, for example, 100% by mass or less, 20% by mass or less, 10% by mass or less, or 5% by mass or less. In one embodiment, the concentration of the coupling agent is, for example, 0.05% by mass or more and 100% by mass or less, relative to 100% by mass of the primer.

The coupling agent has both an organic reactive group and a hydrolyzable silyl group in a single molecule thereof. Each of these functional groups reacts with a functional group present on the surface of the coating film (layer) B illustrated in FIG. 1 and/or on the surface of the support A illustrated in FIG. 1, thereby enhancing the adhesion between the coating film (layer) B and the support A.

In one embodiment, the organic reactive groups (for example, at least one group "A" in the general formula of the coupling agent described below) may be present singly in a single molecule of the coupling agent, or two or more thereof may be present. Examples of the organic reactive group include, but are not limited to, at least one selected from the group consisting of an amino group, a glycidyl group, an epoxy group, a vinyl group, a methacryl group, an acryl group, a styryl group, a phenyl group, an isocyanate group, a blocked isocyanate group, and a mercapto group. In some embodiments, a plurality of organic reactive groups are the same or different from each other. The organic reactive group may be a glycidyl group, an epoxy group, an isocyanate group, or a blocked isocyanate group.

In some embodiments, the hydrolyzable groups (for example, at least one group "B" in the general formula of the coupling agent described below, which forms a hydrolyzable silyl group together with an adjacent Si atom) may be present singly in a single molecule of the coupling agent, and two or more thereof may be present. The coupling agent may comprise three hydrolyzable groups in a single molecule. The hydrolyzable group is not limited as long as it undergoes hydrolysis to generate a silanol group together with the adjacent Si atom. Examples of the hydrolyzable group include an alkoxy group, an acetoxy group, and a chlorine atom. The hydrolyzable group may be an alkoxy group. The alkoxy group may have 1 to 5 carbon atoms, preferably 1 to 3 carbon atoms, and more preferably 1 or 2 carbon atoms. The coupling agent may have two or more alkoxy groups having 1 to 5 carbon atoms bonded to Si. In some embodiments, a plurality of hydrolyzable groups are the same or different from each other. A carbon chain of the alkoxy group may be linear or branched.

Specific examples of the hydrolyzable silyl group include a trimethoxysilyl group, a triethoxysilyl group, a tripropoxysilyl group, a tris(2-methoxyethoxy)silyl group, a dimethoxyalkylsilyl group, a diethoxyalkylsilyl group, a dipropoxyalkylsilyl group, and a bis(2-methoxyethoxy)alkylsilyl group. In some embodiments, the hydrolyzable silyl group is at least one of a trimethoxysilyl group or a triethoxysilyl group.

For example, the following general formula represents the coupling agent:

(R^{A}-R^{CP})₄₋ₙₛ-Si-R^{B}ₙₛ

wherein at least one R^{A} is the organic reactive group, at least one R^{B} is the hydrolyzable group, R^{CP}s are each independently a single bond or a divalent organic group, and ns is an integer of 1 or more and 3 or less.

"-Si-R^{B}ₙₛ" constitutes a hydrolyzable silyl group. In the general formula, R^{A} other than an organic reactive group may be, for example, a hydrogen atom. In the general formula, R^{B} other than a hydrolyzable group may be, for example, a hydrocarbon group. In some embodiments, ns is 2 or more, or 3.

In the general formula, R^{CP} is a single bond or divalent organic group. In some embodiments, R^{CP} is a divalent organic group. Examples of R^{CP} include a C₁₋₆ alkylene group, -(CH₂)_{cp1}-O-(CH₂)_{cp2}- (where cp1 is an integer from 1 to 6, and cp2 is an integer from 1 to 6), and -phenylene-(CH₂)_{cp3}- (where cp3 is an integer from 0 to 6). In some embodiments, R^{CP} is a C₁₋₃ alkylene group, a C₂₋₃ alkylene group, or -CH₂CH₂CH₂-. Each of these groups may be substituted with one or more substituents selected from, for example, a fluorine atom, a C₁₋₆ alkyl group, a C₂₋₆ alkenyl group, and a C₂₋₆ alkynyl group.

Examples of the coupling agent include vinyltriethoxysilane, vinyltrimethoxysilane, vinyltris(2-methoxyethoxy) silane, vinylmethyldimethoxysilane, p-styryltrimethoxysilane, p-styryltriethoxysilane, 3-methacryloxypropyltriethoxysilane, 3-methacryloxypropyltrimethoxysilane, 3-methacryloxypropylmethyldimethoxysilane, 3-methacryloxypropylmethyldiethoxysilane, 3-acryloxypropyltrimethoxysilane, 3-acryloxypropyldimethoxysilane, 2-(3,4-epoxycyclohexyl)ethyltrimethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, 3-mercaptopropylmethyldimethoxysilane, 3-mercaptopropyltrimethoxysilane, 3-mercaptopropyltriethoxysilane, 3-octanoylthio-1-propyltriethoxysilane, 3-aminopropyltriethoxysilane, 3-aminopropyltrimethoxysilane, N-(2-aminoethyl)-3-aminopropyltrimethoxysilane, N-(2-aminoethyl)-3-aminopropylmethyldimethoxysilane, 3-(N-phenyl)aminopropyltrimethoxysilane, 3-triethoxysilyl-N-(1,3-dimethyl-butylidene)propylamine, N-(vinylbenzyl)-2-aminoethyl-3-aminopropyltrimethoxysilane, 3-ureidopropyltriethoxysilane, 3-isocyanatopropyltriethoxysilane, 3-isocyanatopropyltrimethoxysilane, tris(trimethoxysilylpropyl)isocyanurate, and "X-12-1195", "X-12-1293", and "X-12-1308ES", all manufactured by Shin-Etsu Chemical Co., Ltd. The coupling agents may be used singly or in combination with two or more thereof.

The primer may further comprise an additive. Examples of the additive include a thickener, a leveling agent, an antifoaming agent, an antistatic agent, an anti-fogging agent, an ultraviolet absorber, a radical scavenger, a pigment, a dye, and a filler. In view of weather resistance, the primer may contain at least one of an ultraviolet absorber and a radical scavenger.

Examples of the ultraviolet absorber include a benzophenone-based compound, a benzotriazole-based compound, a triazine-based compound, a radically polymerizable compound, and an inorganic compound. In some embodiments, the ultraviolet absorber is a triazine-based compound.

Examples of the benzophenone-based ultraviolet absorber include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, bis(5-benzoyl-4-hydroxy-2-methoxyphenyl)methane, 2,2'-dihydroxy-4-methoxybenzophenone, 2,2'-dihydroxy-4,4'-dimethoxybenzophenone, 2,2',4,4'-tetrahydroxybenzophenone, 4-dodecyloxy-2-hydroxybenzophenone, 5-benzoyl-2,4-dihydroxybenzophenone, 2-hydroxy-4-methoxy-2'-carboxybenzophenone, 2-hydroxy-4-stearyloxybenzophenone, and 4,6-dibenzoylresorcinol.

Examples of the benzotriazole-based ultraviolet absorber include 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2-hydroxy-5-tert-octylphenyl)benzotriazole, 2-(2-hydroxy-3,5-di-tert-octylphenyl)benzotriazole, 2-[2'-hydroxy-3',5'-bis(α,α'-dimethylbenzyl)phenyl]benzotriazole), 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6"-tetrahydrophthalimidomethyl)-5'-methylphenyl]benzotriazole, and 2,2-methylenebis[4-(1,1,3,3-tetramethylbutyl)-6-(2H-benzotriazol-2-yl)phenol].

Examples of the triazine-based ultraviolet absorber include 2-[4-[(2-hydroxy-3-dodecyloxypropyl)oxy]-2-hydroxyphenyl]-4,6-bis(2,4-dimethylphenyl)-1,3,5-triazine and 2-[4-[(2-hydroxy-3-tridecyloxypropyl)oxy]-2-hydroxyphenyl]-4,6-bis(2,4-dimethylphenyl)-1,3,5-triazine.

Examples of the radically polymerizable ultraviolet absorber include 2-hydroxy-4-acryloxybenzophenone, 2-hydroxy-4-methacryloxybenzophenone, 2-hydroxy-5-acryloxybenzophenone, 2-hydroxy-5-methacryloxybenzophenone, 2-hydroxy-4-(acryloxy-ethoxy)benzophenone, 2-hydroxy-4-(methacryloxy-ethoxy)benzophenone, 2-hydroxy-4-(methacryloxy-diethoxy)benzophenone, 2-hydroxy-4-(acryloxy-triethoxy)benzophenone, 2-(2'-hydroxy-5'-methacryloxyethyl-3-tert-butylphenyl)-2H-benzotriazole, and 2-(2'-hydroxy-5'-methacryloxypropyl-3-tert-butylphenyl)-5-chloro-2H-benzotriazole.

Examples of an inorganic ultraviolet absorber include cerium oxide, zinc oxide, aluminum oxide, zirconium oxide, bismuth oxide, cobalt oxide, copper oxide, tin oxide, and titanium oxide.

Examples of the radical scavenger include a hindered amine-type compound.

Examples of a hindered amine-type light stabilizer include bis(2,2,6,6-tetramethyl-4-piperidyl) succinate, bis(2,2,6,6-tetramethylpiperidyl) sebacate, bis(1,2,2,6,6-pentamethyl-4-piperidyl) 2-(3,5-di-tert-butyl-4-hydroxybenzyl)-2-butyl malonate, 1-[2-[3-(3,5-di-tert-butyl-4-hydroxyphenyl)propynyloxy]ethyl]-4-{3-(3,5-di-tert-butyl-4-hydroxyphenyl)propynyloxy]-2,2,6,6-tetramethylpiperidine, and bis(1-octoxy-2,2,6,6-tetramethyl-4-piperidyl) sebacate.

The (total) concentration of the ultraviolet absorber and/or radical scavenger is, for example, 1% by mass or more, preferably 2% by mass or more, and more preferably 3% by mass or more, relative to 100% by mass of the primer. The (total) concentration of the ultraviolet absorber and/or radical scavenger is, for example, 10% by mass or less, preferably 8% by mass or less, and more preferably 6% by mass or less, relative to 100% by mass of the primer. In one embodiment, the (total) concentration of the ultraviolet absorber and/or radical scavenger is 1% by mass or more and 10% by mass or less relative to 100% by mass of the primer.

The primer may be diluted with an organic solvent. Examples of the organic solvent include, but are not limited to, lower alcohols such as ethanol, butanol, and isopropyl alcohol; ketones such as acetone, methyl ethyl ketone, and methyl isobutyl ketone; cellosolves such as methyl cellosolve and ethyl cellosolve; aromatic hydrocarbons such as xylene and toluene; aliphatic hydrocarbons such as n-hexane and n-heptane; and esters such as ethyl acetate and butyl acetate.

The adhesive layer may contain a compound having a moiety with affinity for the support and a moiety with affinity for the layer.

The average thickness of the adhesive layer is preferably 0.001 µm or more and 20 µm or less, more preferably 0.01 µm or more and 15 µm or less, and still more preferably 0.05 µm or more and 10 µm or less.

The structure can be produced by forming the layer on the support, preferably by applying a solution containing the polymer having a functional group comprising a nitrogen atom and an additive used as needed, onto the support. The polymer having a functional group comprising a nitrogen atom, the additive, the solution, and the method of applying the solution can be the same as the compounds and the method described for the first aspect.

When the structure comprises the adhesive layer, such a structure can be produced by forming the adhesive layer on the top of the support, followed by formation of the layer on the adhesive layer. In this embodiment, the adhesive layer may be formed by a coating method, such as a wet coating method. Examples of the wet coating method include dip coating, spin coating, flow coating, spray coating, roll coating, and gravure coating. The primer may be applied by spin coating.

The technical scope of the present disclosure also comprises a member comprising the layer. Examples of the member comprising such a layer include a heat-transfer tube, a fin, a valve, an exterior material, a cover material, and a housing.

The technical scope of the present disclosure also comprises an article including the member. Examples of such an article include a thermal storage system, a heat exchanger, an aircraft, a ship, a vehicle, an electric wire, a traffic signal, a sign, a billboard, a residential roof, a solar panel, a greenhouse, and a power-generation turbine.

The layer, film, structure, member, and article of the present disclosure have been described in detail hereinabove. However, the layer, film, structure, member, and article of the present disclosure, as well as methods for producing the same, are not limited to those illustrated above.

The present disclosure can provide a layer, film, structure, member, and article capable of suppressing the growth of ice. Such a layer, film, structure, member, and article can be preferably applied to a thermal storage system, a heat exchanger, an aircraft, a ship, a vehicle, an electric wire, a traffic signal, a sign, a billboard, a residential roof, a solar panel, a greenhouse, a power-generation turbine, or the like.

### Examples

Hereinafter, the present invention will be described in more detail by way of Examples, but the present invention is not limited thereto.

### <Contact Angle of Water (Static Contact Angle)>

The contact angle of water (static contact angle) was measured using a "Drop Master 701 contact angle meter" manufactured by Kyowa Interface Science Co., Ltd. Specifically, measurements, each with a 2-µL water droplet, were made at five points per test piece, and the average value was adopted.

### <Surface Roughness (Arithmetic Average Roughness Ra)>

The surface roughness (arithmetic average roughness Ra) was measured using a "VK-9710 laser microscope" manufactured by Keyence Corporation. Specifically, the Ra of a 30-µm square surface area was measured for image data acquired at a magnification of 150× with objective lens. Measurements were made at six points, and the average value was adopted.

### <Ratio of Nitrogen Atoms to Carbon Atoms (N/C) Present on Coating Surface>

The ratio of nitrogen atoms to carbon atoms present on the coating surface was measured by X-ray photoelectron spectroscopy (XPS). Using a "PHI 5000 VersaProbe II photoelectron spectrometer" manufactured by ULVAC-PHI, Inc., peak areas of the N1s and C1s orbitals were determined under the following conditions to calculate the ratio:
X-ray source: monochromated Al Kα radiation (25 W)
Photoelectron detection area: 1,000 µm × 300 µm
Photoelectron detection angle: 45°
Pass energy: 23.5 eV

### Example 1

To conduct a test using aluminum as the support, an A1050 aluminum plate (thickness: 0.1 mm) was cut with a cutter to obtain an aluminum piece having dimensions of 10 × 30 mm and a thickness of 0.1 mm. The aluminum piece was placed in a 50 ml centrifuge tube together with acetone and subjected to ultrasonic cleaning for 30 minutes to remove contaminants from the surface. After removal of the aluminum piece from the centrifuge tube, the aluminum piece was set in an "ozone cleaner PC440", manufactured by BIOFORCE NANOSCIENCES, and irradiated with UV for 1 minute to further remove contaminants from the surface and simultaneously activate negatively charged ions on the aluminum surface. "POLYMENT NK-100PM", manufactured by Nippon Shokubai Co., Ltd., was diluted with distilled water at 1:5, and the resulting aqueous solution with an active-ingredient concentration of 10 wt% was applied onto the activated aluminum piece using a "hand-drawn bar coater OSP-100", manufactured by OSG System Products Co., Ltd., to prepare a coating film having a wet thickness of 100 µm on the aluminum piece. The aluminum piece was then heated at 150°C for 3 minutes using a "DX302 high-temperature dryer", manufactured by Yamato Scientific Co., Ltd. to yield an aluminum test piece having a 10 µm-thick layer of POLYMENT NK-100PM. On the surface of the resulting test piece, the contact angle of water was 96°, the surface roughness Ra was 0.016 µm, and the N/C was 0.03.

### Example 2

A round microscope cover glass (diameter: 15 mm) manufactured by Matsunami Glass Ind., Ltd. was set in an "ozone cleaner PC440", manufactured by BIOFORCE NANOSCIENCES, and irradiated with UV for 1 minute to remove contaminants from the surface. POLYMENT NK-100PM, manufactured by Nippon Shokubai Co., Ltd., was diluted with water to an active-ingredient concentration of 10 wt%, and a coating film having a wet thickness of 100 µm was prepared from the resulting solution on the glass using a "hand-drawn bar coater OSP-100", manufactured by OSG System Products Co., Ltd. The coating film was then heated at 150°C for 3 minutes using a "DX302 high-temperature dryer", manufactured by Yamato Scientific Co., Ltd., to yield a glass test piece having a 10 µm-thick layer of POLYMENT NK-100PM. On the surface of the resulting test piece, the contact angle of water was 92°, the surface roughness Ra was 0.017 µm, and the N/C was 0.03.

### Example 3

A glass test piece having a 10-µm thick layer of poly-L-lysine hydrochloride was obtained by performing the same procedure as in Example 2, except that "POLYMENT NK-100PM" was replaced with "poly-L-lysine hydrochloride" manufactured by FUJIFILM Wako Pure Chemical Corporation. On the surface of the resulting test piece, the contact angle of water was 64°, the surface roughness Ra was 1.159 µm, and the N/C was 0.22.

### Example 4

A glass test piece having a 10 µm-thick layer of ε-poly-L-lysine was obtained by performing the same procedure as in Example 2, except that "POLYMENT NK-100PM" was replaced with an "ε-poly-L-lysine 25% solution", manufactured by FUJIFILM Wako Pure Chemical Corporation. On the surface of the resulting test piece, the contact angle of water was 33°, the surface roughness Ra was 0.337 µm, and the N/C was 0.22.

### Example 5

A glass test piece having a 10 µm-thick layer of EPOMIN SP-200 was obtained by performing the same procedure as in Example 2, except that "POLYMENT NK-100PM" was replaced with "EPOMIN SP-200" manufactured by Nippon Shokubai Co., Ltd. On the surface of the resulting test piece, the contact angle of water was 34°, the surface roughness Ra was 0.012 µm, and the N/C was 0.25.

### Comparative Example 1

An A1050 aluminum plate (thickness: 0.1 mm) was cut with a cutter to obtain an aluminum piece having dimensions of 10 × 30 mm and a thickness of 0.1 mm. The aluminum piece was placed in a 50 ml centrifuge tube together with acetone and subjected to ultrasonic cleaning for 30 minutes to remove contaminants from the surface, thereby yielding a plain aluminum test piece.

### Comparative Example 2

An A1050 aluminum plate (thickness: 0.1 mm) was cut with a cutter to obtain an aluminum piece having dimensions of 10 × 30 mm and a thickness of 0.1 mm. The aluminum piece was placed in a 50 ml centrifuge tube together with acetone and subjected to ultrasonic cleaning for 30 minutes to remove contaminants from the surface. After removal of the aluminum piece from the centrifuge tube, the aluminum piece was set in an "ozone cleaner PC440", manufactured by BIOFORCE NANOSCIENCES, and irradiated with UV for 1 minute to further remove contaminants from the surface and simultaneously activate negatively charged ions on the aluminum surface. "Aqueous polyacrylamide solution" (active ingredient: 50 wt%, molecular weight: 10,000) manufactured by SIGMA-ALDRICH, was diluted with water to an active-ingredient concentration of 40.0 wt%, and the resulting aqueous solution was applied onto the activated aluminum piece using a "hand-drawn bar coater OSP-25", manufactured by OSG System Products Co., Ltd., to prepare a coating film having a wet thickness of 25 µm on the aluminum piece. The aluminum piece was then heated at 130°C for 3 minutes using a "DX302 high-temperature dryer", manufactured by Yamato Scientific Co., Ltd., to yield an aluminum test piece having a 10 µm-thick layer of polyacrylamide. On the surface of the resulting test piece, the contact angle of water was 17°, the surface roughness Ra was 0.018 µm, and the N/C was 0.22.

### Comparative Example 3

An aluminum test piece having a 10 µm-thick layer of ammonium polyacrylate was obtained by performing the same procedure as in Comparative Example 2, except that the "aqueous polyacrylamide solution" was replaced with "ammonium polyacrylate solution 70-110" (active ingredient: 42 wt%, molecular weight: 10,000) manufactured by FUJIFILM Wako Pure Chemical Corporation. On the surface of the resulting test piece, the contact angle of water was 25°, the surface roughness Ra was 0.032 µm, and the N/C was 0.04.

### Comparative Example 4

A round microscope cover glass (diameter: 15 mm) manufactured by Matsunami Glass Ind., Ltd. was set in an "ozone cleaner PC440", manufactured by BIOFORCE NANOSCIENCES, and irradiated with UV for 1 minute to remove contaminants from the surface. "Aqueous polyacrylamide solution" (active ingredient: 50 wt%, molecular weight: 10,000), manufactured by SIGMA-ALDRICH, was diluted with water to an active-ingredient concentration of 40 wt%, and a coating film having a wet thickness of 25 µm was prepared from the resulting solution on the glass using a "hand-drawn bar coater OSP-25", manufactured by OSG System Products Co., Ltd. The coating film was then heated at 130°C for 3 minutes using a "DX302 high-temperature dryer", manufactured by Yamato Scientific Co., Ltd., to yield a glass test piece having a 10 µm-thick layer of polyacrylamide. On the surface of the resulting test piece, the contact angle of water was 16°, the surface roughness Ra was 0.019 µm, and the N/C was 0.24.

### Comparative Example 5

A glass test piece having a 10 µm-thick layer of ammonium polyacrylate was obtained by performing the same procedure as in Comparative Example 4, except that the "aqueous polyacrylamide solution" was replaced with "ammonium polyacrylate solution 70-110" (active ingredient: 42 wt%, molecular weight: 10,000) manufactured by FUJIFILM Wako Pure Chemical Corporation. On the surface of the resulting test piece, the contact angle of water was 26°, the surface roughness Ra was 0.035 µm, and the N/C was 0.04.

### Observation of Ice Crystal

As illustrated in FIG. 2, a "thermally conductive double-sided silicone adhesive tape TC-10SAS", manufactured by Shin-Etsu Chemical Co., Ltd., was attached to the upper surface of a Peltier-type temperature-control unit (40 × 40 mm) inside a "10030 cooling/heating stage" manufactured by Japan High-Tech Co., Ltd., and two test pieces were attached onto the tape, thereby enabling the arbitrary temperature variation of each test piece between -40°C and room temperature with a precision of 0.1°C/min. The resulting cooling/heating stage was then placed inside a "low-temperature incubator EMU-0541", manufactured by Fukushima Galilei Co., Ltd., and positioned such that both test pieces were oriented vertically with respect to the ground. About 1 hour after powering on the incubator, the internal temperature was stabilized at 2.0 ± 1.0°C. Subsequently, a bucket containing about 1 L of water with a small mist generator inserted therein was placed inside the incubator, and the generator was operated to produce mist within the chamber. As a result, the humidity inside the incubator reached 80 ± 5% after about two hours. By repeatedly turning the mist generator on and off, this humidity level was maintained throughout the ice-crystal observation experiment. In this manner, an environment at a temperature of 2°C and a humidity of 80% was created inside the low-temperature incubator.

### Temperature Variation Program

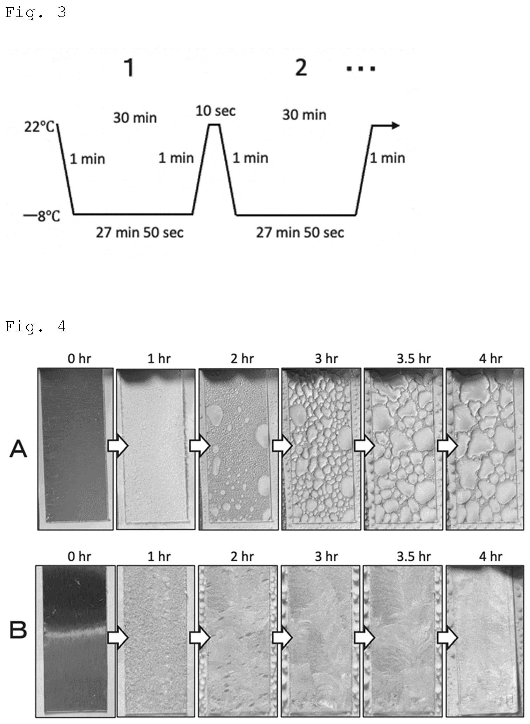

By applying the temperature program illustrated in FIG. 3 to the "10030 cooling/heating stage" manufactured by Japan High-Tech Co., Ltd., the temperature of the test piece attached to the Peltier type temperature-control unit was varied between -8°C and 22°C. The minimum unit of the temperature variation program was as follows:
[22°C (10 s) → cooling (1 min) → -8°C (27 min 50 s) → heating (1 min) →]

While the experiment involving repeating the program 8 times consecutively for a total duration of 240 minutes (4 hours) was performed, it was observed what type of ice formed on the surface of the test piece and how that ice melted. An "iPad(R) mini" manufactured by Apple Inc. was used for the observation. Changes occurring on the test piece during the temperature variation were analyzed using video files recorded with the camera function of the device. The position of the iPad(R) mini was adjusted so that the clock placed to the right of the test piece could be captured simultaneously (FIG. 2). At the start of the temperature variation program, the clock was set to 00:00 and activated, thereby clarifying the correspondence between the changes in the ice on the test piece and the temperature variation program.

### Change in Ice with Time

FIG. 4 presents images extracted from the video at approximately 0, 1, 2, 3, 3.5, and 4 hours after the start of the temperature variation program consecutively repeated 8 times in total, which are arranged from left to right in chronological order and each show the surface of the test piece with water thereon frozen. A is the test piece of Comparative Example 1, and B is the test piece of Example 1. All the test pieces were positioned vertically with respect to the ground in an environment with a temperature of 2°C and a humidity of 80% (FIG. 2). The surface of A underwent immediate dew condensation upon cooling to -8°C, and the dew-condensed water transformed into ice having a rounded, bulged, curved protruded surface. The ice grew by adsorbing surrounding water during the 27 minutes and 50 seconds for which the temperature was maintained at -8°C. When the temperature increased to 22°C, the ice melted and formed a water droplet. The water droplet remained on the test piece without flowing off. When the temperature was subsequently lowered again to -8°C, the water droplet refroze and transformed into a larger ice block having a rounded protruded surface. The growth of the ice block progressed with each cycle of the temperature variation program. In contrast, test piece B did not allow formation of ice having a rounded protruded surface, but allowed a thin film-like ice to form instead. This ice melted and immediately flowed off over the coating film. Each time the temperature was lowered to -8°C by the temperature variation program, the thin ice composed of aligned ice nuclei formed again with high reproducibility.

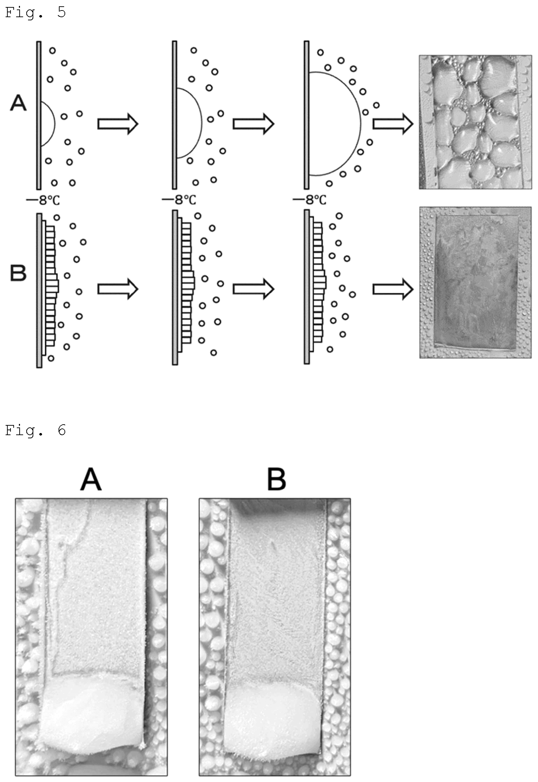

FIG. 5 schematically illustrates ice generated on a test piece during execution of the temperature variation program. A is the test piece of Comparative Example 1, and B is the test piece of Example 1. Both test pieces were placed in an environment with a temperature of 2°C and a humidity of 80%. On the surface of A, ice having a curved protruded surface formed and increased in size with each cycle. The right end of A shows the ice block formed on the surface about 240 minutes after eight cycles of cooling to -8°C. In contrast, ice nuclei whose crystal growth had been stopped were aligned on the surface of B. These ice nuclei appeared macroscopically as thin ice having a thickness of 1 mm or less. This thin ice melted when heated to 22°C and became water droplets, which flowed off the surface of the test piece. The thin ice consisting of the aligned ice nuclei formed reproducibly each time cooling to -8°C was repeated.

FIG. 6 shows images of ice generated on each surface during execution of the temperature variation program. A is the test piece of Comparative Example 2, and B is the test piece of Comparative Example 3. In the environment at a temperature of 2°C and a humidity of 80%, the progression of the temperature variation program on the cooling/heating stage generated ice with a curved protruded surface on both coating films of A and B as shown in FIG. 6, and increased the ice size with each cycle. Unlike the test piece of Comparative Example 1, the increase in ice size occurred in the lower region of the test pieces, but the mechanism could be explained using FIG. 5.

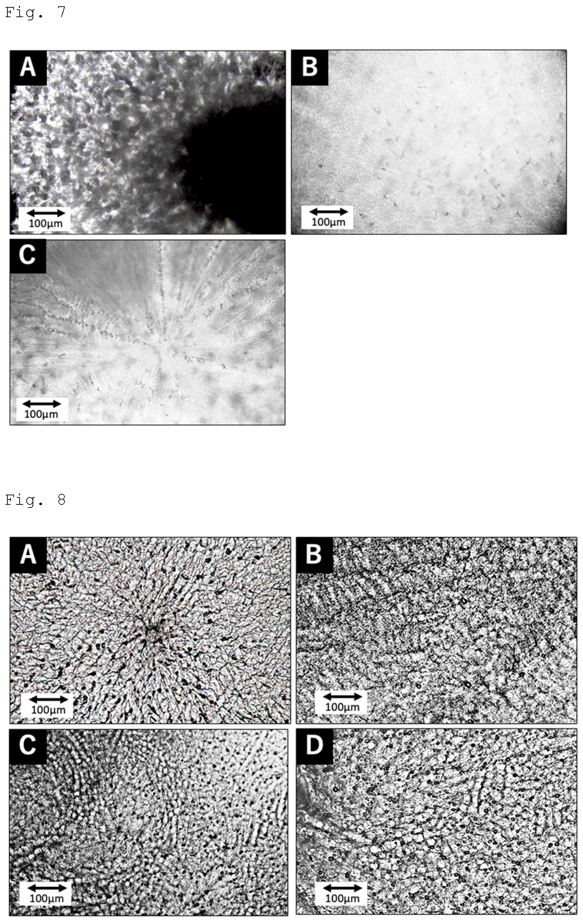

FIG. 7 shows microscopic images of ice formed on each test piece. A is the test piece of the round microscope cover glass (diameter: 15 mm) manufactured by Matsunami Glass Ind., Ltd., B is the test piece of Comparative Example 4, and C is the test piece of Comparative Example 5. The microscope was a "biological microscope BX53" manufactured by Olympus Corporation, combined with the "10030 cooling/heating stage" manufactured by Japan High-Tech Co., Ltd. A 1-µL water droplet was placed on each test piece, and the freezing process was observed under a microscope.

Setting the cooling rate to -30°C/min and lowering the stage temperature caused the water droplets on all glass test pieces to undergo supercooling and freeze at around -25°C. This freezing temperature did not generate any aligned ice nuclei on A to C. Changing the temperature to -8°C likewise did not generate aligned ice nuclei. On A, the ice having a curved protruded surface formed, and the thickness thereof blocked the illumination from the microscope, partially creating a dark region in the microscopic image. Such ice with a protruded surface did not form on B or C, none of which produced microscopic images indicating aligned ice nuclei.

FIG. 8 shows microscopic images of ice formed on each test piece, obtained by performing the same procedure as for FIG. 7. A is the test piece of Example 2, B is the test piece of Example 3, C is the test piece of Example 4, and D is the test piece of Example 5. Setting the cooling temperature of the cooling/heating stage to -30°C/min and lowering the temperature caused the water droplets placed on the coating films of A to D to undergo supercooling and freeze at around -25°C, thereby transforming into ice. The microscopic images of the ice on A to D as shown in FIG. 8 were captured at the moment of freezing. The images did not change even when the temperature of the stage was raised to -8°C. Furthermore, no changes in the images were observed even after maintaining -8°C for 1 hour. The microscopic images of A to D resemble an aggregation of brick blocks or densely packed plant cells, and in some cases exhibit patterns similar to fern leaves. The appearance of such unique patterns results from the individual ice nuclei being aligned regularly on the coating film in the same orientation, and the resulting difference in refractive index between the basal plane and the prism plane appears as observable boundary lines. Accordingly, FIG. 8 illustrates that the ice formed on A to D is composed of innumerable ice nuclei aligned and densely packed without gaps. Although the individual ice nuclei would otherwise exhibit a regular hexagonal shape inherently, the quasi-ice layer cannot uniformly suppress the growth of all six prism planes, causing the nuclei to assume distorted shapes. These results indicate that the thin ice illustrated in FIGS. 4B and 5B is composed of innumerable aligned ice nuclei.

### Industrial Applicability

The present disclosure can provide a layer, film, structure, member, and article capable of suppressing the growth of an ice block. Such a layer, film, structure, member, and article can be preferably applied to a thermal storage system, a heat exchanger, an aircraft, a ship, a vehicle, an electric wire, a traffic signal, a sign, a billboard, a residential roof, a solar panel, a greenhouse, a power-generation turbine, etc.

## Claims

1. A layer allowing thin ice to form on a surface thereof, wherein the thin ice has a thickness of 1 mm or less and comprises aligned ice nuclei.

2. The layer according to claim 1, allowing ice nuclei having an average Feret diameter of 100 µm or less to form on the surface thereof when the layer is held for 1 minute under environmental conditions of an atmospheric pressure of 1,013 hPa, a humidity of 80 ± 5% RH, and a temperature of 2 ± 1°C, and then cooled to -8 ± 1°C under the same environmental conditions.

3. The layer according to claim 1 or 2, allowing ice nuclei having an average Feret diameter of 100 µm or less to form on the surface thereof when the layer under environmental conditions of an atmospheric pressure of 1,013 hPa and a temperature of 20°C to 25°C is cooled to -25 ± 5°C.

4. The layer according to any one of claims 1 to 3, wherein when the layer under environmental conditions of an atmospheric pressure of 1,013 hPa and a temperature of 20°C to 25°C is cooled to -25 ± 5°C to form ice nuclei and then further held at -8 ± 2°C for 1 hour, the layer is capable of maintaining an average Feret diameter of the ice nuclei of 100 µm or less.

5. The layer according to any one of claims 1 to 4, allowing thin ice having an average thickness of 1 mm or less to form on the surface thereof when the layer is held for 1 minute under environmental conditions of an atmospheric pressure of 1,013 hPa, a humidity of 80 ± 5% RH, and a temperature of 2 ± 1°C, and then cooled to -8 ± 1°C under the same environmental conditions.

6. The layer according to any one of claims 1 to 5, allowing thin ice comprising aligned ice nuclei to form on 95% or more of the surface thereof when the layer is held for 1 minute under environmental conditions of an atmospheric pressure of 1,013 hPa, a humidity of 80 ± 5% RH, and a temperature of 2 ± 1°C, and then subjected to continuous cycles of cooling to -8 ± 1°C and heating to 22 ± 3°C under the same environmental conditions.

7. The layer according to any one of claims 1 to 6, wherein after thin ice comprising aligned ice nuclei is allowed to form on a surface of the layer and melt, the layer allows thin ice comprising aligned ice nuclei to form on the surface again.

8. The layer according to any one of claims 1 to 7, wherein when thin ice comprising aligned ice nuclei forms on a surface of the layer, followed by immersing the surface partially or entirely in water for 120 hours to allow thin ice comprising aligned ice nuclei to form on the surface again, the thin ice forming after the immersing in water has a same shape as the thin ice forming before the immersing in water.

9. The layer according to any one of claims 1 to 8, wherein a static contact angle of water on the surface is 30° or more and 100° or less, as measured 1 second after a water droplet impacts the surface at room temperature.

10. The layer according to any one of claims 1 to 9, wherein the layer has a Ra value, a surface roughness parameter, of 0.001 µm or more and 1.500 µm or less, as measured on the surface in a region of 30 µm in length and 30 µm in width.

11. The layer according to any one of claims 1 to 10, comprising a polymer having a functional group comprising a nitrogen atom.

12. The layer according to any one of claims 1 to 11, comprising a polymer having a repeating unit with a nitrogen atom equivalent of 70 g/eq or less.

13. The layer according to any one of claims 1 to 12, wherein a ratio of an amount of nitrogen atoms present on the surface to an amount of carbon atoms is 0.01 or more and 0.33 or less.

14. The layer according to any one of claims 1 to 13, wherein the functional group comprising a nitrogen atom is a primary and/or secondary amino group or a nitrogen-containing heterocyclic group.

15. The layer according to any one of claims 1 to 14, wherein the polymer having a functional group comprising a nitrogen atom comprises a primary and/or secondary amino group or a nitrogen-containing heterocyclic group in a main chain and/or a side chain.

16. The layer according to any one of claims 1 to 15, wherein the polymer having a functional group comprising a nitrogen atom is a (meth)acrylic (co)polymer or a (meth)acrylamide (co)polymer.

17. The layer according to any one of claims 1 to 16, wherein the polymer having a functional group comprising a nitrogen atom has an acid value of 100 mg KOH/g or less.

18. The layer according to any one of claims 1 to 17, which is a coating film.

19. A film comprising water molecules,
the film having a thickness of 20 Å or less,
wherein the film exhibits no Ih phase under conditions of an atmospheric pressure of 1,013 hPa and a temperature of -8 ± 1°C.

20. A structure comprising:
a support; and
the layer according to any one of claims 1 to 18,
wherein the layer covers a part or all of a surface of the support.

21. The structure according to claim 20, wherein the layer is disposed on an outermost surface of the structure.

22. The structure according to claim 20 or 21, further comprising:
an adhesive layer disposed between the support and the layer, wherein
the layer has an average thickness of 0.001 µm or more and 20 µm or less, and
the adhesive layer has an average thickness of 0.001 µm or more and 20 µm or less.

23. A member comprising the layer according to any one of claims 1 to 18.

24. An article comprising the member according to claim 23.
